# EUROPEAN PATENT APPLICATION

(11) **EP 4 029 912 A1**
(43) Date of publication of application: **20.07.2022**
(21) Application number: 20862746.3
(22) Date of filing: 10.09.2020
(51) Int. Cl.: C08L 23/08, C08L 23/12, C08L 23/14, C08J 9/04, C08K 3/013

(54) **POLYPROPYLENE RESIN COMPOSITION AND MOLDED ARTICLES COMPRISING SAME**

(30) Priority: 13.09.2019 JP 2019167222
(71) Applicant: Prime Polymer Co., Ltd., Tokyo 105-7122 (JP)
(72) Inventor: MINOWA, Akira, Sodegaura-shi, Chiba 299-0265 (JP); KAWAMURA, Tatsuji, Sodegaura-shi, Chiba 299-0265 (JP)
(74) Representative: J A Kemp LLP
(86) International application number: PCT/JP2020/034351
(87) International publication number: WO 2021/049585

(57) **Abstract**

In a polypropylene resin composition including the following components (A) to (D) in prescribed amounts, limiting the amount of a polypropylene component having a molecular weight of 10^{6.5} or more to less than 0.05 wt% can provide a propylene resin composition that includes an impact polypropylene and a high flow homopolypropylene and is particularly preferable for foam molding, and a molded article comprising the composition. (A) Impact polypropylene that includes 5 wt% or more and 20 wt% or less of a propylene-ethylene copolymer having an intrinsic viscosity [η] of 1.5 dl/g or more and 3.8 dl/g or less and having an MFR (230°C, 2.16 kg) of 30 g/10 min to 200 g/10 min, (B) high flow homopolypropylene having MFR (230°C, 2.16 kg) of 200 g/10 min to 1000 g/10 min, (C) ethylene elastomer having an MFR (190°C, 2.16 kg) of 0.5 g/10 min to 40 g/10 min, and (D) inorganic filler.

## Description

### Technical Field

The present invention relates to a polypropylene resin composition and a molded article comprising the same.

### Background Art

Since polypropylene resins are excellent in, for example, moldability, balance of physical properties, recycling characteristics and cost performance, they are widely used as resin materials in various industrial fields, such as daily necessities, residential field, household appliance field and automobile parts.

In recent years, for the automobile parts, weight saving for improvement in fuel economy and for global greenhouse gas reduction has been strongly required, and particularly in interior parts, uses of foam molded bodies have increased.

As one of injection foam molding methods to meet various performance requirements for foam molded bodies composed of polypropylene resins, there is known a core back molding method that is capable of weight saving while maintaining part rigidity and is capable of achieving improvement in surface appearance.

Regarding a polypropylene resin composition that can be utilized in the core back molding method, Patent Literature 1 discloses a linear polypropylene resin composition including a linear propylene-ethylene block copolymer that is composed of a linear propylene polymer portion and a linear ethylenepropylene random copolymer portion, has specific physical properties including a melt flow rate (MFR: 230°C, load of 2.16 kg) exceeding 60 g/10 min and a specific composition, and is strain hardenable, together with a blowing agent. Patent Literature 1 discloses that regarding an effect due to use of the linear polypropylene resin composition, there can be provided an injection foam molded article that prevents unevenness on the foam molded article surface from occurring by making cells at the flow front hard to break and is excellent in surface appearance.

Patent Literature 2 discloses a polypropylene resin composition (X) for foam molding, including a polypropylene resin composition (A) having a sea-island structure including a polypropylene resin as a sea component and a thermoplastic resin as an island component, together with a blowing agent (B). In Patent Literature 2, as the polypropylene resin composition (A), a propylene-ethylene block copolymer having MFR (230°C, load of 2.16 kg) of 50 to 300 g/10 min is illustrated. Patent Literature 2 discloses that by forming the polypropylene resin composition (A) so that a specific interfacial area of a specific value or more between the sea component and the island component may be obtained, turbulence or foam entrainment at the melt front (tip of resin flow) is hardly brought about, thereby inhibiting occurrence of dimples on the injection foam molded article surface.

In Patent Literature 3, a polypropylene resin composition for foam molding, including the following components is disclosed as one embodiment of the invention.
(A) Impact polypropylene: 45 to 87 parts by weight
(B) High-molecular weight component-containing homopolypropylene: 2 to 15 parts by weight
(C) Rubber component: 10 to 30 parts by weight
(D) Inorganic filler: 0 to 20 parts by weight
(E) High flow homopolypropylene: 5 to 20 parts by weight
(In the above composition, the total weight of (A), (B), (C), (D) and (E) is 100 parts by weight.)

Patent Literature 3 discloses that MFR (ASTM D1238, 230°C, load of 2.16 kg) of the impact polypropylene as the component (A) is in the range of 50 to 200 g/10 min, the amount of a propylene-ethylene copolymer specified as a component soluble in paraxylene at ordinary temperature is in the range of 5 to 30 wt%, and the intrinsic viscosity [η] of the component soluble in paraxylene at ordinary temperature is in the range of 3.5 to 10 dl/g.

Patent Literature 3 discloses a high-molecular weight component-containing homopolypropylene as the component (B) including 5 to 22 wt% of a propylene homopolymer component having an intrinsic viscosity [η], as measured in tetralin at 135°C, of 13.5 to 20.0 dl/g.

Patent Literature 3 discloses that foam molding using the above-described polypropylene resin composition for foam molding can provide an injection foam molded article that is light in weight, excellent in appearance, homogeneous in cell shape and excellent in mechanical strength. Patent Literature 3 further discloses a homopolypropylene having an MFR, as measured at 230°C and a load of 2.16 kg in accordance with ASTM D1238, of 200 to 1000 g/10 min as a specific example of the high flow homopolypropylene, and discloses that by adding the high flow homopolypropylene having the MFR, a flow of the polypropylene resin composition for foam molding can be improved.

### Citation List

### Patent Literature

Patent Literature 1:
   Japanese Patent Laid-Open No. 2010-144133
Patent Literature 2:
   Japanese Patent Laid-Open No. 2014-196398
Patent Literature 3:
   International Publication No. WO2010-050509

### Summary of Invention

### Technical Problem

It is an object of the present invention to provide a polypropylene resin composition that includes an impact polypropylene and a high flow homopolypropylene and is preferable particularly for foam molding, and a molded article comprising the composition.

### Solution to Problem

The polypropylene resin composition according to the present invention is a polypropylene resin composition including
30 wt% or more and 70 wt% or less of impact polypropylene (A) having a melt flow rate (MFR), as measured under the conditions of 230°C and a load of 2.16 kg in accordance with ASTM D1238, of 30 g/10 min or more and 200 g/10 min or less,
7 wt% or more and 29 wt% or less of a high flow homopolypropylene (B) having an MFR, as measured under the conditions of 230°C and a load of 2.16 kg in accordance with ASTM D1238, of 200 g/10 min or more and 1000 g/10 min or less,
0 wt% or more and 30 wt% or less of an ethylene elastomer (C) having MFR, as measured under the conditions of 190°C and a load of 2.16 kg in accordance with ASTM D1238, of 0.5 g/10 min or more and 40 g/10 min or less, and
0 wt% or more and 40 wt% or less of an inorganic filler (D), with the proviso that the total of the components (A), (B), (C) and (D) is 100 wt%, wherein
an amount of a polypropylene component having a molecular weight of 10^{6.5} or more in the polypropylene resin composition is less than 0.05 wt%, and
the impact polypropylene (A) includes 5 wt% or more and 20 wt% or less of a propylene-ethylene copolymer specified as a decane-soluble part, and an intrinsic viscosity [η] thereof is 1.5 dl/g or more and 3.8 dl/g or less.

The molded article according to the present invention is obtained by molding the above polypropylene resin composition.

### Advantageous Effect of Invention

The present invention can provide a polypropylene resin composition that includes an impact polypropylene and a high flow homopolypropylene and is preferable particularly for foam molding, and a molded article comprising the composition.

### Brief description of Drawing

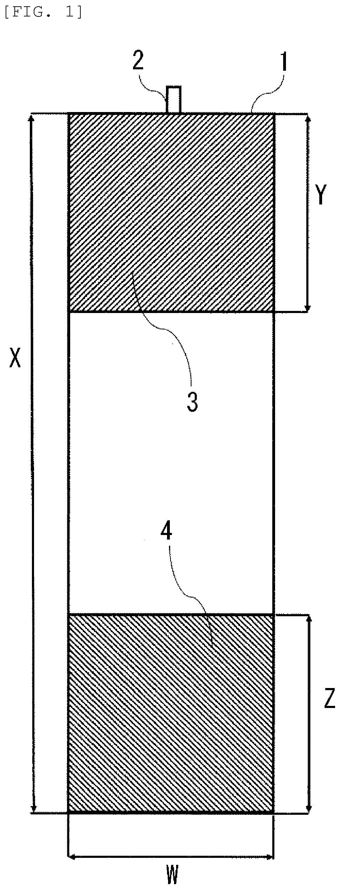

[Figure 1] Figure 1 shows a planar shape of an injection foam molded article and a relationship between a position of a side gate, a dimple evaluation area and a foaming failure evaluation area.

### Description of Embodiments

The present inventors have earnestly studied a polypropylene resin composition that includes an impact polypropylene and a high flow homopolypropylene and is capable of inhibiting occurrence of dimples in a foam molded article. As a result, the present inventors have acquired new findings that by adjusting the ratio of the high flow homopolypropylene to the polypropylene resin composition to a specific range and by limiting the amount of a high-molecular weight polypropylene component having a molecular weight of a specific value or more to an extremely low level, occurrence of dimples in a foam molded article can be effectively inhibited. The present invention has been completed based on new findings of the present inventors.

The polypropylene resin composition according to the present invention includes the following components (A) to (D) .
(A) Impact polypropylene having MFR (measured under the conditions of 230°C and a load of 2.16 kg in accordance with ASTM D1238) of 30 g/10 min or more and 200 g/10 min or less: 30 wt% or more and 70 wt% or less
(B) High flow homopolypropylene having MFR (measured under the conditions of 230°C and a load of 2.16 kg in accordance with ASTM D1238) of 200 g/10 min or more and 1000 g/10 min or less: 7 wt% or more and 29 wt% or less
(C) Ethylene elastomer having MFR (measured under the conditions of 190°C and a load of 2.16 kg in accordance with ASTM D1238) of 0.5 g/10 min or more and 40 g/10 min or less: 0 wt% or more and 30 wt% or less
(D) Inorganic filler: 0 wt% or more and 40 wt% or less

In the above composition, the total of the components (A) to (D) is 100 wt%.

An amount of a polypropylene component having a molecular weight of 10^{6.5} or more in the whole of the polypropylene resin composition according to the present invention is less than 0.05 wt%. In addition to this, the impact polypropylene includes 5 wt% or more and 20 wt% or less of a propylene-ethylene copolymer specified as a decane-soluble part, and an intrinsic viscosity [η] thereof is 1.5 dl/g or more and 3.8 dl/g or less.

Hereinafter, each of components of the polypropylene resin composition according to the present invention will be described.

### • Component (A)

MFR of the impact polypropylene as the component (A) is set to 30 g/10 min or more and 200 g/10 min or less, and preferably 30 g/10 min or more and 150 g/10 min or less.

The ratio of the propylene-ethylene copolymer specified as a decane-soluble part to the whole of the component (A) is 5 wt% or more and 20 wt% or less from the viewpoint of obtaining an effect due to use of the impact polypropylene and good foamability.

The intrinsic viscosity [η] of the decane-soluble part is 1.5 dl/g or more and 3.8 dl/g or less, preferably 1.7 dl/g or more and 3.8 dl/g or less, and more preferably 1.9 dl/g or more and 3.8 dl/g or less, from the viewpoint of obtaining an effect due to use of the impact polypropylene and good foamability.

As the impact polypropylene, one satisfying the above physical properties can be used by selecting it from products produced by known production methods and commercial products.

One impact polypropylene may be used singly, or two or more different impact polypropylenes may be used in combination.

### • Component (B)

The high flow homopolypropylene as the component (B) is a component that imparts a preferred flow in molding to the polypropylene resin composition. By blending this high flow homopolypropylene, good flow can be obtained in the foam molding, particularly in the injection foam molding. When the amount of this component is large, the surface layer can be hardened.

MFR of the component (B) is set to 200 g/10 min or more and 1000 g/10 min or less.

If MFR of the component (B) is less than 200 g/10 min, the surface layer becomes soft in the injection foam molding even when the content of the high-molecular weight polypropylene component is limited to a value lower than the prescribed value, and therefore, a dimple sometimes occurs on the injection foam molded article surface.

If MFR of the component (B) exceeds 1000 g/10 min, a gas escapes in the injection foam molding, and foaming failure sometimes takes place.

The blending ratio of the component (B) (the total of the components (A) to (D) is 100 wt%) is set to 7 wt% or more and 29 wt% or less.

If the blending ratio of the component (B) is less than 7 wt%, the surface layer becomes soft, and therefore, even when the content of the high-molecular weight polypropylene component is limited to a value lower than the prescribed value, a dimple sometimes occurs on the injection foam molded article surface. If the blending ratio of the component (B) exceeds 29 wt%, a gas escapes in the injection foam molding, and foaming failure sometimes takes place.

Regarding the relationship between MFR of the component (A) and MFR of the component (B), it is preferable to set the upper limit of the MFR of the component (A) to less than 200 g/10 min and to set the lower limit of the MFR of the component (B) to 200 g/10 min or more.

As the high flow homopolypropylene, one satisfying the above physical properties can be used by selecting it from products produced by known production methods and commercial products.

### • Component (C)

For the purpose of, for example, adjusting impact resistance of a foam molded article, an ethylene elastomer as the component (C) may be added to the polypropylene resin composition, as needed.

The blending ratio of the component (C) (the total of the components (A) to (D) is 100 wt%) is set to 0 wt% or more and 30 wt% or less, and is preferably 1 wt% or more and 30 wt% or less, more preferably 10 wt% or more and 30 wt% or less, and still more preferably 15 wt% or more and 25 wt% or less.

The ethylene elastomer preferably has a density of 0.85 g/cm³ or more and 0.92 g/cm³ or less.

As the ethylene elastomer, one having the above physical properties can be used by selecting it from products produced by known production methods and commercial products.

One ethylene elastomer can be used singly, or two or more different ethylene elastomers can be used in combination.

A preferred monomer that is copolymerized with ethylene in the ethylene elastomer is, for example, an α-olefin. The α-olefin is preferably an α-olefin having 3 to 10 carbon atoms. Specific examples of the α-olefins include propylene, 1-butene, 1-pentene, 1-hexene, 4-methyl-1-pentene, 3-methyl-1-pentene, 1-heptene, 1-octene, 1-nonene and 1-decene, and one or two or more of these can be used. Among these α-olefins, 1-butene and 1-octene are particularly preferable.

### • Inorganic filler

The inorganic filler as the component (D) can be added to the polypropylene resin composition according to the physical properties of a desired molded article. Examples of the inorganic fillers include heavy calcium carbonate, precipitated calcium carbonate, talc, glass fiber, magnesium carbonate, mica, kaolin, calcium sulfate, barium sulfate, titanium white, white carbon, carbon black, aluminum hydroxide, and magnesium hydroxide. These can be used singly, or can be used by mixing two or more.

The shape and the particle diameter of the inorganic filler are not particularly limited, and they can be selected according to the physical properties of a desired molded article. When the polypropylene resin composition is used for foam molding, the particle diameter (average particle diameter measured by laser method) of the inorganic filler is preferably 0.5 µm or more and 20 µm or less, and more preferably 1.0 µm or more and 15 µm or less.

The blending ratio of the component (D) (the total of the components (A) to (D) is 100 wt%) is set to 0 wt% or more and 40 wt% or less, and is preferably 0 wt% or more and 30 wt% or less, more preferably 1 wt% or more and 30 wt% or less, still more preferably 10 wt% or more and 30 wt% or less, and particularly preferably 15 wt% or more and 25 wt% or less.

### • High-molecular weight polypropylene component

The present inventors have acquired new findings that high-molecular weight homopolypropylene that can be the cause of occurrence of dimples in homopolypropylene is a component having a "molecular weight of 10^{6.5}" or more. The present inventors have further acquired new findings that by limiting the content ratio of the high-molecular weight polypropylene component to the whole of the polypropylene resin composition to less than 0.05 wt% (including 0 wt%), occurrence of dimples can be effectively prevented. The present invention has been completed based on new findings of the present inventors.

In other words, according to the present invention, the polypropylene resin composition includes a low-molecular weight homopolypropylene having a high flow in a specific blending ratio and does not substantially include a high-molecular weight polypropylene component, and due to this, it becomes possible to obtain good flow in the introduction into a molding tool and to obtain good foamability and an effect of inhibiting occurrence of dimples on the surface of a foam molded article.

The content of the high-molecular weight polypropylene component having a molecular weight of 10^{6.5} or more in the polypropylene resin composition is preferably less than 0.04 wt%, and more preferably less than 0.03 wt%.

Means for limiting the content ratio of the aforesaid high-molecular weight polypropylene component that can be the cause of occurrence of dimples in the polypropylene resin composition to less than 0.05 wt% is not particularly limited, but for example, the following method can be used.

Among the components included in the polypropylene resin composition, components that may include the high-molecular weight polypropylene component are an impact polypropylene and/or a high flow homopolypropylene. These components sometimes include the high-molecular weight polypropylene component depending on the production conditions therefor, such as the type of a catalyst.

Therefore, by using the impact polypropylene and the high flow homopolypropylene that have been confirmed to include no high-molecular weight polypropylene component, a polypropylene resin composition in which the content of the high-molecular weight polypropylene component has been set to "less than 0.05 wt%" can be provided.

On the other hand, even in the case where the high-molecular weight polypropylene component is included in at least one of the impact polypropylene and the high flow homopolypropylene, and if the amount thereof is an amount of such a degree as is capable of satisfying the conditions of "less than 0.05 wt%", a polypropylene resin composition in which the content of the high-molecular weight polypropylene component has been set to "less than 0.05 wt%" can be provided by using such an impact polypropylene and/or a high flow homopolypropylene.

The content of the high-molecular weight polypropylene component can be measured by the method described in Examples and Comparative Examples described later.

In the present invention, the reason why occurrence of dimples on the surface of a foam molded article is effectively inhibited is presumed to be that low-molecular weight homopolypropylene having a fast crystallization rate enhances the degree of crystallinity of a foam molded article to increase rigidity of a portion of the foam molded article, the portion being in the vicinity of the surface and being firstly solidified in a molding tool, and thereby, a dimple that is a crater-like recession on the surface of the foam molded article is inhibited from occurring. On the other hand, it is thought that if the polypropylene resin composition includes a significant amount of the high-molecular weight homopolypropylene, the amount of a gas generated at the tip of a fluid resin increases, and as a result, the amount of a gas entrained between the mold and the resin increases, so that an effect of inhibiting occurrence of dimples due to enhancement of the degree of crystallinity by the low-molecular weight homopolypropylene is impaired.

For reference, in Patent Literature 1, unevenness on the foam molded article surface is prevented from occurring by making cells hard to break at the flow front of a resin material in a mold for injection foam molding owing to strain-hardenable polypropylene. In Patent Literature 2, in the polypropylene resin composition having a sea-island structure, the specific interfacial area of the island component based on the sea component is set within a specific range, and thereby, turbulence or foam entrainment at the melt front (tip of resin flow) of a resin material in a mold for injection foam molding hardly occurs, and due to this, occurrence of dimples is inhibited. Accordingly, the dimple occurrence inhibition effect of the present invention is due to a mechanism completely different from that of the effect of inhibiting unevenness on the foam molded article surface from occurring in Patent Literatures 1 and 2.

The polypropylene resin composition may be one for foam molding, including a blowing agent as a component (E) in addition to the components (A) to (D). This blowing agent is not particularly limited, and a blowing agent capable of being utilized for desired foam molding may be selected and used.

As the blowing agents, a chemical blowing agent and a physical blowing agent can be used.

Examples of the chemical blowing agents include a decomposable blowing agent, and examples of the physical blowing agents include a solvent type blowing agent and a gaseous blowing agent.

One blowing agent can be used singly, or two or more blowing agents can be used in combination.

Specific examples of the decomposable blowing agents can include the following compounds.
(1) Inorganic blowing agent: sodium bicarbonate, sodium carbonate, ammonium bicarbonate, ammonium carbonate, ammonium nitrite
(2) Organic blowing agent:
   (a) N-nitroso compound: N,N'-dinitrosoterephthalamide, N,N'-dinitrosopentamethylenetetramine
   (b) Azo compound: azodicarbonamide, azobisisobutyronitrile, azocyclohexylnitrile, azodiaminobenzene, barium azodicarboxylate
   (c) Sulfonyl hydrazide compound: benzenesulfonyl hydrazide, toluenesulfonyl hydrazide, p,p'-oxybis(benzenesulfonyl hydrazide), diphenylsulfone-3,3'-disulfonyl hydrazide
   (d) Azide compound: calcium azide, 4,4'-diphenyldisulfonyl azide, p-toluenesulfonyl azide

The decomposable blowing agent may be used in combination with a blowing aid that induces the generation of a gas by decomposition, for example, an organic acid such as citric acid or an organic acid metal salt such as sodium citrate.

As the solvent type blowing agents, various liquefied gases can be used, and specific examples thereof can include low-boiling point aliphatic hydrocarbons, such as propane, butane, neopentane, heptane, isohexane, hexane, isoheptane and heptane, and low-boiling point fluorine-containing hydrocarbons typified by chlorofluorocarbon gas.

Examples of the gaseous blowing agents include inert gases, such as carbon dioxide, nitrogen, argon, helium, neon and astatine. The gaseous blowing agent may be used in a supercritical state.

From the viewpoints of appearance and water resistance of a molded article obtained from the polypropylene resin composition, an organic blowing agent is preferable.

The blending ratio of the blowing agent to the total of the aforesaid components (A) to (D) is 0.1 wt% or more and 10 wt% or less, preferably 0.4 wt% or more and 5.0 wt% or less, and more preferably 0.7 wt% or more and 3.0 wt% or less.

### • Other components

The polypropylene resin composition may contain various additives, as needed, as long as the purpose thereof, for example, the purpose for foam molding is not impaired. Examples of the additives can include a nucleating agent, an antioxidant, a hydrochloric acid absorber, a heat stabilizer, a weathering stabilizer, a light stabilizer, an ultraviolet light absorber, a lubricant, an antistatic agent, a flame retardant, a pigment, a dye, a dispersant, a copper inhibitor, a neutralizer, a plasticizer, a crosslinking agent, a flow improver such as a peroxide, a weld strength improver, a natural oil, a synthetic oil, and a wax. These can be used singly or in combination of two or more.

The polypropylene resin composition according to the present invention can be used as a material for producing a molded article, and is preferable particularly as a material for producing a foam molded article.

### • Method for producing foam molded article

One embodiment of production of a foam molded article using the polypropylene resin composition according to the present invention will be described below.

One embodiment of a method for producing a foam molded article includes
a step of filling a mold for foam molding with a foamable resin material, and
a step of foaming and solidifying the foamable resin material in the mold to obtain a foam molded article.

As the foamable resin material, the polypropylene resin composition according to the present invention is used. The polypropylene resin composition according to the present invention may be prepared in the form of a composition including no blowing agent, then the composition is stored or distributed if necessary or if desired, and thereafter, the composition may be mixed with a blowing agent and fed as a foamable resin material to the production process for a foamed article.

The mold for molding, the method for filling a mold for molding with a resin material, and the foam molding conditions may be selected according to the shape or the physical properties of a desired foam molded article.

By using an injection molding method in which filling of a mold for molding with a resin material is carried out by injection, an injection foam molded article can be obtained.

The blowing agent may be mixed with the components of the resin material other than the blowing agent and then introduced into a mold for molding, or it may be injected and mixed with the resin material in, for example, a cylinder for injection molding or a flow channel from a cylinder to a cavity, in the introduction path for the resin material to the mold for molding.

For forming an injection foam molded article having a thin wall part with a thickness of about 1.2 to about 5.0 mm, a core back molding method can be preferably used.

One embodiment of a molding tool used for the core back molding method has a stationary mold and a movable mold. These mold halves are preferably in the mold clamping state during the injection filling with the resin material. The volume of the cavity that is injection-filled with the resin material in the mold can be increased by bringing back (core back) the movable mold and thereby expanding the cavity. The timing for operating the movable mold after the completion of the injection filling can be determined according to, for example, the desired foaming rate, foaming shape, and various physical properties of an injection foam molded article.

The moving speed of the movable mold in the core back process can be selected according to the conditions, such as thickness of a molded article, composition of the resin material, type and amount of the blowing agent added, mold temperature and resin temperature.

The temperature of the resin material injected and the mold temperature can be selected according to, for example, thickness of a molded article, composition of the resin material, and type and amount of the blowing agent added. For example, the temperature of the resin material injected can be set to 170 to 250°C, and preferably 180 to 220°C. The mold temperatures of the stationary mold and the movable mold can be each set to 10 to 100°C, and preferably 30 to 80°C. The injection pressure can be selected from the range of 10 to 250 MPa, and preferably 12 to 200 MPa. From the viewpoint of obtaining good foamability, the temperature of the resin material for the injection filling of the mold is preferably higher than the mold temperature.

By blending a prescribed amount of the high flow homopolypropylene (B) with the impact polypropylene (A) and by limiting the amount of the high-molecular weight polypropylene component to less than a prescribed value, the polypropylene resin composition according to the present invention can obtain good flow into the mold and good foamability in the injection foam molding when the composition is used for foam molding, and occurrence of dimples on the surface of the injection foam molded article can be effectively prevented.

The foam molded article according to the present invention can be preferably used in various applications such as automobile interior and exterior parts, substitutes for cardboards, electrical appliances, and building materials. The foam molded article can be particularly preferably used in automobile interior part applications.

### Examples

Hereinafter, the present invention will be more specifically described based on Examples and Comparative Examples, but the present invention is not limited to these Examples.

In each of Examples and Comparative Examples, injection foam molding was carried out under the following conditions.

### (Injection foam molding conditions)

- Injection molding machine: manufactured by UBE MACHINERY CORPORATION, LTD., MD350S-III type (mold clamping force 350 t)
- Mold
   Cavity size: length 350 mm, width: 100 mm, thickness 2.0 mm
   Gate: side gate, thickness 1 mm, width 6 mm
   Position of side gate: A side gate was provided at the position where a center of one side of a width 100 mm in a rectangle having a length 350 mm and a width 100 mm and a center of the width of the side gate were coincident.
- Injection temperature: 200°C
- Mold surface temperature: 40°C
- Injection speed: 80 mm/s
- Foam molding conditions
   Molding tool clearance after completion of foaming process: 3.0 mm
   Core back preset speed: 250 mm/s
   Foaming start delay time after filling with resin: 0 s
   Mold cavity clearance in injection (LO): 2.0 mm

Regarding an injection foam molded article obtained in each of Examples and Comparative Examples, an evaluation of the following items was carried out.

### (Evaluation method)

Each of evaluation areas on a molded surface of an injection foam molded article at the face of a mold having been subjected to core back process, the evaluation areas being shown in Figure 1, was evaluated by visual observation. Figure 1 shows a planar shape of an injection foam molded article 1. The injection foam molded article 1 has a side gate 2, a dimple evaluation area 3, and a foaming failure evaluation area 4, which are located at the positions shown in Figure 1. The total length (X) of the injection foam molded article 1 is 350 mm, the width (W) thereof is 100 mm, the length (Y) of the dimple evaluation area 3 is 100 mm, and the length (Z) of the foaming failure evaluation area is 100 mm.
1) Dimple
   B: One or more dimples in the evaluation area
   A: No dimple in the evaluation area
2) Foaming failure
   B: One or more strains capable of being recognized with the naked eye in the evaluation area
   A: No strain capable of being recognized with the naked eye in the evaluation area

### (Measurement of content of high-molecular weight polypropylene component)

The content of the high-molecular weight polypropylene component having a molecular weight of 10^{6.5} or more included in the polypropylene resin composition was determined by measuring a molecular weight distribution of a measurement sample by gel permeation chromatography (GPC) under the following measurement conditions and calculating an amount of a component composed of homopolypropylene having a molecular weight of 10^{6.5} or more from the integral molecular weight distribution value.

### • GPC measuring device

Column: two TOSOH GMHHR-H(S)HT
Detector: liquid chromatogram RI detector WATERS 150C • Measurement conditions
Solvent: 1,2,4-trichlorobenzene
Measurement temperature: 145°C
Flow rate: 1.0 milliliter/min
Sample concentration: 5 mg/10 milliliters
Injection quantity: 300 microliters
Calibration curve: Universal Calibration
Analytical program: HT-GPC (Ver. 1.0)

### (Example 1)

The following components (A) to (D) were mixed and granulated to obtain a resin material including no blowing agent.
- Impact polypropylene (A): MFR (230°C, load of 2.16 kg) = 70 g/10 min, room temperature decane-soluble part = 9.7 mass%, intrinsic viscosity [η] of room temperature decane-soluble part = 3.2 dl/g, 54 parts by weight
- High flow homopolypropylene (B): MFR (230°C, load of 2.16 kg) = 500 g/10 min, 10 parts by weight
- Ethylene elastomer (C): ethylene-1-octene copolymer (EOR) (manufactured by The Dow Chemical Company, ENGAGE (R) 8137, MFR (190°C, load of 2.16 kg) = 13 g/10 min, ethylene content = 80 mol%, density = 0.864 g/cm³), 16 parts by weight
- Inorganic filler (D): talc (manufactured by ASADA MILLING CO., LTD., tradename JM-209, average particle diameter (laser diffraction) 4 to 5 µm), 20 parts by weight

To 100 parts by weight (that is, total amount of components (A) to (D)) of this resin material including no blowing agent, a blowing agent (E): ADCA (azodicarbonamide) that was an organic blowing agent was added in a ratio of 0.5 wt%, thereby preparing a resin material for injection foam molding, which was composed of a polypropylene resin composition.

The resulting resin material for injection foam molding was subjected to injection molding under the aforesaid conditions to produce a foam molded article, and the foam molded article was evaluated. The results are shown in Table 1.

The ratio of a high-molecular weight homopolypropylene component (G) in Table 1 represents a ratio of a polypropylene component having a molecular weight of 10^{6.5} or more to the whole of the polypropylene resin composition.

The room temperature in the measurement of the content of the room temperature decane-soluble part and the intrinsic viscosity of the room temperature decane-soluble part was 23°C ± 5°C.

### (Example 2)

The following components (A), (B) and (D) were mixed and granulated to obtain a resin material including no blowing agent.
- Impact polypropylene (A): MFR (230°C, load of 2.16 kg) = 60 g/10 min, room temperature decane-soluble part = 14.3 mass%, intrinsic viscosity [η] of room temperature decane-soluble part = 2.5 dl/g, 60 parts by weight
- High flow homopolypropylene (B): MFR (230°C, load of 2.16 kg) = 500 g/10 min, 20 parts by weight
- Inorganic filler (D): talc (manufactured by ASADA MILLING CO., LTD., tradename JM-209, average particle diameter (laser diffraction) 4 to 5 µm), 20 parts by weight

Using this resin material including no blowing agent, a blowing agent was added and then a foam molded article was produced in the same manner as in Example 1, and the foam molded article was evaluated. The results are shown in Table 1.

### (Example 3)

The following components (A) to (C) were mixed and granulated to obtain a resin material including no blowing agent.
- Impact polypropylene (A): MFR (230°C, load of 2.16 kg) = 62 g/10 min, room temperature decane-soluble part = 14.6 mass%, intrinsic viscosity [η] of room temperature decane-soluble part = 2.6 dl/g, 64 parts by weight
- High flow homopolypropylene (B): MFR (230°C, load of 2.16 kg) = 500 g/10 min, 20 parts by weight
- Ethylene elastomer (C): ethylene-1-octene copolymer (EOR) (manufactured by The Dow Chemical Company, ENGAGE (R) 8137, MFR (190°C, load of 2.16 kg) = 13 g/10 min, ethylene content = 80 mol%, density = 0.864 g/cm³), 16 parts by weight

Using this resin material including no blowing agent, a blowing agent was added and then a foam molded article was produced in the same manner as in Example 1, and the foam molded article was evaluated. The results are shown in Table 1.

### (Example 4)

A foam molded article was produced in the same manner as in Example 1, except that the following material was used as the component (A), and the blending ratio of the component (B) was changed as follows, and the foam molded article was evaluated. The results are shown in Table 1.
- Impact polypropylene (A): MFR (230°C, load of 2.16 kg) = 63 g/10 min, room temperature decane-soluble part = 8.7 mass%, intrinsic viscosity [η] of room temperature decane-soluble part = 2.7 dl/g, 39 parts by weight
- High flow homopolypropylene (B): MFR (230°C, load of 2.16 kg) = 500 g/10 min, 25 parts by weight

### (Example 5)

A foam molded article was produced in the same manner as in Example 1, except that the following materials were used as the components (A) and (B), and the blending ratio of the component (C) was changed as follows, and the foam molded article was evaluated. The results are shown in Table 1.
- Impact polypropylene (A): MFR (230°C, load of 2.16 kg) = 39 g/10 min, room temperature decane-soluble part = 9.3 mass%, intrinsic viscosity [η] of room temperature decane-soluble part = 2.5 dl/g, 39 parts by weight
- High flow homopolypropylene (B): MFR (230°C, load of 2.16 kg) = 200 g/10 min, 24 parts by weight
- Ethylene elastomer (C): ethylene-1-octene copolymer (EOR) (manufactured by The Dow Chemical Company, ENGAGE (R) 8137, MFR (190°C, load of 2.16 kg) = 13 g/10 min, ethylene content = 80 mol%, density = 0.864 g/cm³), 17 parts by weight

### (Example 6)

A foam molded article was produced in the same manner as in Example 1, except that the following material was used as the component (A), and the foam molded article was evaluated. The results are shown in Table 1.
- Impact polypropylene (A): MFR (230°C, load of 2.16 kg) = 72 g/10 min, room temperature decane-soluble part = 8.9 mass%, intrinsic viscosity [η] of room temperature decane-soluble part = 3.5 dl/g, 54 parts by weight

### (Example 7)

A foam molded article was produced in the same manner as in Example 1, except that the following material was used as the component (A), and the blending ratio of the component (B) was changed as follows, and the foam molded article was evaluated. The results are shown in Table 1.
- Impact polypropylene (A): MFR (230°C, load of 2.16 kg) = 60 g/10 min, room temperature decane-soluble part = 10.0 mass%, intrinsic viscosity [η] of room temperature decane-soluble part = 2.5 dl/g, 42 parts by weight
- High flow homopolypropylene (B): MFR (230°C, load of 2.16 kg) = 500 g/10 min, 22 parts by weight

### (Comparative Example 1)

A foam molded article was produced in the same manner as in Example 1, except that the following material was used as the component (A), and the following component (F) was added, and the foam molded article was evaluated. The results are shown in Table 1.
- Impact polypropylene (A): MFR (230°C, load of 2.16 kg) = 60 g/10 min, room temperature decane-soluble part = 9.5 mass%, intrinsic viscosity [η] of room temperature decane-soluble part = 3.3 dl/g, 53 parts by weight
- High-molecular weight homopolypropylene (F): MFR (230°C, load of 2.16 kg) = 3 g/10 min, intrinsic viscosity [η] in tetralin at 135°C = 8.1 dl/g, 1 part by weight

The blending ratio of the blowing agent (E) was a blending ratio to the total 100 parts by weight of the components (A) to (D) and (F).

### (Comparative Example 2)

A foam molded article was produced in the same manner as in Example 1, except that the following material was used as the component (A), and the blending ratio of the component (B) was changed as follows, and the foam molded article was evaluated. The results are shown in Table 1.
- Impact polypropylene (A): MFR (230°C, load of 2.16 kg) = 69 g/10 min, room temperature decane-soluble part = 10.5 mass%, intrinsic viscosity [η] of room temperature decane-soluble part = 3.2 dl/g, 58 parts by weight
- High flow homopolypropylene (B): MFR (230°C, load of 2.16 kg) = 500 g/10 min, 6 parts by weight

### (Comparative Example 3)

A foam molded article was produced in the same manner as in Example 1, except that the following material was used as the component (A), and the blending ratio of the component (B) was changed as follows, and the foam molded article was evaluated. The results are shown in Table 1.
- Impact polypropylene (A): MFR (230°C, load of 2.16 kg) = 60 g/10 min, room temperature decane-soluble part = 8.1 mass%, intrinsic viscosity [η] of room temperature decane-soluble part = 2.5 dl/g, 34 parts by weight
- High flow homopolypropylene (B): MFR (230°C, load of 2.16 kg) = 500 g/10 min, 30 parts by weight

### (Comparative Example 4)

A foam molded article was produced in the same manner as in Example 1, except that the following material was used as the component (A), and the blending ratios of the components (B) and (C) were changed as follows, and the foam molded article was evaluated. The results are shown in Table 1.
- Impact polypropylene (A): MFR (230°C, load of 2.16 kg) = 77 g/10 min, room temperature decane-soluble part = 5.8 mass%, intrinsic viscosity [η] of room temperature decane-soluble part = 4.0 dl/g, 41 parts by weight
- High flow homopolypropylene (B): MFR (230°C, load of 2.16 kg) = 500 g/10 min, 20 parts by weight
- Ethylene elastomer (C): ethylene-1-octene copolymer (EOR) (manufactured by The Dow Chemical Company, ENGAGE (R) 8137, MFR (190°C, load of 2.16 kg) = 13 g/10 min, ethylene content = 80 mol%, density = 0.864 g/cm³), 19 parts by weight

As shown in Table 1, in Examples 1 to 7, neither occurrence of dimples nor occurrence of strains was observed, and good foamability and a dimple occurrence prevention effect were obtained.

On the other hand, in Comparative Example 1, the polypropylene resin composition included a high-molecular weight polypropylene component having a molecular weight of 10^{6.5} or more in an amount of a prescribed value (0.05 wt%) or more, and therefore, occurrence of dimples was observed though the foamability was good.

In Comparative Example 2, the blending ratio of the high flow homopolypropylene (B) was lower than a prescribed value, and occurrence of dimples was observed. Moreover, the flow was poor, and the amount of the resin at the end of the molded article decreased, so that foaming failure also took place.

In Comparative Example 3, the blending ratio of the high flow homopolypropylene (B) was higher than a prescribed value, and an escaping of a gas from the foam molded article occurred, so that foaming failure took place though occurrence of dimples was able to be prevented.

In Comparative Example 4, since the intrinsic viscosity of the propylene-ethylene copolymer specified as a decane-soluble part in the impact polypropylene (A) was high, the viscosity of the resin material in the injection filling of the mold also became high, and a growth of cells during foaming was hindered, so that foaming failure took place. On the other hand, since the high flow component was included in a prescribed amount, the surface had enough rigidity, and occurrence of dimples was not observed.

**[Table 1]**

| Table 1 | Requirements | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Impact polypropylene (A) | MFR (230° C, 2.16 kg) | 70 | 60 | 62 | 63 | 60 | 72 | 60 | 60 | 69 | 60 | 77 |
| | Blending ratio (wt%) | 54 | 60 | 64 | 39 | 39 | 54 | 42 | 53 | 58 | 34 | 41 |
| | Propylene-ethylene copolymer (wt%) | 9.7 | 14.3 | 14.6 | 8.7 | 9.3 | 8.9 | 10.0 | 9.5 | 10.5 | 8.1 | 5.8 |
| | Propylene-ethylene copolymer intrinsic viscosity (dl/g) | 3.2 | 2.5 | 2.6 | 2.7 | 2.5 | 3.5 | 2.5 | 3.3 | 3.2 | 2.5 | 4.0 |
| High-molecular weight homopolypropylene (G) | Component having molecular weight of 10^{6.5} or more (wt%) | 0.001 | 0 | 0.001 | 0.001 | 0 | 0.007 | 0 | 0.05 | 0.001 | 0.001 | 0.001 |
| High flow homopolypropylene (B) | MFR (230° C, 2.16 kg) | 500 | ← | ← | ← | 200 | 500 | ← | ← | ← | ← | ← |
| | Blending ratio (wt%) | 10 | 20 | 20 | 25 | 24 | 10 | 22 | 10 | 6 | 30 | 20 |
| Ethylene elastomer (C) | d(g/cm³) | 0.864 | | 0.864 | ← | ← | ← | ← | ← | ← | ← | ← |
| | MFR(190° C, 2.16 kg) | 13 | | 13 | ← | ← | ← | ← | ← | ← | ← | ← |
| | Blending ratio (wt%) | 16 | 0 | 16 | 16 | 17 | 16 | 16 | 16 | 16 | 16 | 19 |
| | Copolymerization component (the number of carbon atoms) | C8 | | C8 | ← | ← | ← | ← | ← | ← | ← | ← |
| Inorganic filler (D) | Type | Talc | ← | ← | ← | ← | ← | ← | ← | ← | ← | ← |
| | Blending ratio (wt%) | 20 | 20 | 0 | 20 | 20 | 20 | 20 | 20 | 20 | 20 | 20 |
| Blowing agent (E) | Type | ADCA | ← | ← | ← | ← | ← | ← | ← | ← | ← | ← |
| | Blending ratio (wt%) | 0.5 | ← | ← | ← | ← | ← | ← | ← | ← | ← | ← |
| High-molecular weight homopolypropylene (F) | Blending ratio (wt%) | 0 | ← | ← | ← | ← | ← | ← | 1 | 0 | ← | ← |
| Evaluation result | Dimple | A | A | A | A | A | A | A | B | B | A | A |
| | Foaming failure | A | A | A | A | A | A | A | A | B | B | B |

### Industrial Applicability

The foam molded article according to the present invention can be preferably used in various applications such as automobile interior and exterior parts, substitutes for cardboards, electrical appliances, and building materials. The foam molded article can be particularly preferably used in automobile interior part applications.

## Claims

1. A polypropylene resin composition comprising
30 wt% or more and 70 wt% or less of impact polypropylene (A) having a melt flow rate (MFR), as measured under the conditions of 230°C and a load of 2.16 kg in accordance with ASTM D1238, of 30 g/10 min or more and 200 g/10 min or less,
7 wt% or more and 29 wt% or less of high flow homopolypropylene (B) having an MFR, as measured under the conditions of 230°C and a load of 2.16 kg in accordance with ASTM D1238, of 200 g/10 min or more and 1000 g/10 min or less,
0 wt% or more and 30 wt% or less of an ethylene elastomer (C) having an MFR, as measured under the conditions of 190°C and a load of 2.16 kg in accordance with ASTM D1238, of 0.5 g/10 min or more and 40 g/10 min or less, and
0 wt% or more and 40 wt% or less of an inorganic filler (D), with the proviso that the total of the components (A), (B), (C) and (D) is 100 wt%, wherein
an amount of a polypropylene component having a molecular weight of 10^{6.5} or more in the polypropylene resin composition is less than 0.05 wt%, and
the impact polypropylene (A) comprises 5 wt% or more and 20 wt% or less of a propylene-ethylene copolymer specified as a decane-soluble part, and an intrinsic viscosity [η] thereof is 1.5 dl/g or more and 3.8 dl/g or less.

2. The polypropylene resin composition according to claim 1, wherein a density of the ethylene elastomer (C) is 0.85 g/cm³ or more and 0.92 g/cm³ or less.

3. The polypropylene resin composition according to claim 1, wherein the ethylene elastomer (C) is a copolymer of ethylene and an α-olefin having 3 to 10 carbon atoms.

4. The polypropylene resin composition according to claim 1, comprising 0 wt% or more and 30 wt% or less of the inorganic filler (D).

5. The polypropylene resin composition according to claim 1, which is for foam molding.

6. The polypropylene resin composition according to claim 5, comprising 0.1 wt% or more and 10 wt% or less of a blowing agent (E) based on the total weight of the components (A) to (D) .

7. The polypropylene resin composition according to claim 6, wherein the blowing agent (E) comprises a chemical blowing agent and/or a physical blowing agent.

8. A molded article obtained by molding the polypropylene resin composition according to any one of claims 1 to 7.

9. The molded article according to claim 8, which is an injection foam molded article.
